# EUROPEAN PATENT APPLICATION

(11) **EP 4 404 433 A1**
(43) Date of publication of application: **24.07.2024**
(21) Application number: 23152053.7
(22) Date of filing: 17.01.2023
(51) Int. Cl.: H02K 1/2795, H02K 1/30, H02K 1/2798, H02K 16/02, H02K 15/03, H02K 21/24

(54) **AXIAL FLUX MACHINE WITH HIGH-SPEED ROTOR DISK**

(71) Applicant: Magnax, 8500 Kortrijk (BE)
(72) Inventor: LEVROUW, Jasper, 8500 Kortrijk (BE); LEIJNEN, Peter, 8500 Kortrijk (BE); ZHANG, Jie, 8500 Kortrijk (BE); BRUNEEL, Jan, 8500 Kortrijk (BE)
(74) Representative: IP HILLS NV

(57) **Abstract**

Rotor disk (100) for an axial flux machine, the rotor disk (100) comprising:
- magnets (103) being attached to the front side (107) of a back iron (101);
- the back iron (101), provided as a wound coil comprising multiple turns (106) and being mounted on an inner hub (104),
wherein:
- the back side (108) of the back iron coil (101) is, at least partially, exposed; and
- the rotor disk (100) comprises a retention system providing structural strength to the back iron coil (101), the retention system comprising
o a retention ring (102) placed around the back iron coil (101), thereby retaining the turns (106) of the back iron coil (101) by compressing the turns (106) in radial direction,
and/or
∘ one or more radially extending welds (1100), thereby retaining the turns (106) of the back iron coil (101) by welding consecutive turns to one another.

## Description

### Field of the Invention

The present invention generally relates to the field of axial flux machines. In particular, an improved rotor disk design is presented, that allows for high rotational speeds, while contributing to an improved electromagnetic performance, reduced material cost and improved rotor cooling.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. During motor operation, the rotor is driven by magnetic fields generated by the stator currents, while in generator condition currents are induced in the stator coils due to the rotation of the rotor. Different topologies are known for axial flux machines, for example comprising one rotor disk and one stator disk, one rotor disk and two stator disks, or two rotor disks positioned on both sides of a stator disk. The axial flux machine may be of the torus type, having a stator yoke, or may be of the yokeless type, not having a stator yoke.

With respect to the rotor disk, the magnets are typically mounted on a back iron, the back iron being provided at the side of the magnets facing away from the air gap. The back iron material is adapted to convey the magnetic flux between adjacent magnets, thereby closing the pathway of the magnetic flux. In view of reducing eddy currents, the back iron may be laminated, for example being provided as a back iron coil. To increase motor power, very high rotational speeds are required. Such high rotational speeds are challenging with respect to the rotor disk design, as the rotor disk needs to offer sufficient structural strength and stiffness, and a reliable retention of the rotor magnets needs to be guaranteed.

In prior art solutions, the magnets are typically glued onto the back iron. An important drawback of gluing, however, is that the characteristics of the glue are temperature-depending, such that the adhesion may become insufficient at thigh temperature and high speed, resulting in failure of a spinning motor. Moreover, glue may degrade over time, thereby impeding long-term durability. Moreover, prior art solutions typically make use of a back disk or support disk, e.g. made of stainless steel, to provide the required structural strength and stiffness to the rotor disk. For example, https://www.yasa.com/technology/ presents a rotor wherein a support disk is arranged at the side of the back iron coil not holding the magnets, the back iron coil being recessed into the support disk. Moreover, a carbon fibre ring, placed around the outer circumference of the magnets, contributes to retaining the magnets, and carbon fibre radial ribs are provided to further increase stiffness of the rotor disk. In such a solution, the required structural strength of the rotor disk mainly derives from the stiff and thick support disk, the latter serving as a supporting structure for the back iron coil. An important drawback, however, is that a support disk made of stainless steel substantially contributes to the total rotor weight, thereby limiting the amount of back iron material if an excessively massive rotor disk is to be avoided. Limiting the amount of back iron material, however, adversely affects the electromagnetic performance of the machine. Moreover, stainless steel is an expensive material, thereby increasing the material cost. Finally, a rotor disk is often cooled from the side not facing the air gap, such that the presence of a support disk impedes an efficient heat extraction.

Similarly, EP2773023A1 discloses an embodiment of a rotor disk, wherein an annular ring of back iron material is supported by a supporting member, the latter being provided as a support disk. The solution further uses an over-winding of strands of reinforcement material toroidally wound over the annular ring of back iron material, the magnets, and the supporting member. The strands, substantially extending in radial direction, serve as rib-like structures, thereby contributing to structural strength and stiffness of the rotor disk, similarly to the aforementioned carbon fibre ribs. Moreover, an encapsulation layer may be used, formed by cured resin over and through the strands and in-filling between the strands, thereby further increasing strength and rigidity of the composite rotor. EP2773023A1 also discloses another embodiment, having the aforementioned strands, but not making use of a supporting member or support disk. As the description mentions, in absence of the supporting member, sufficient strength and rigidity may only be obtained by careful choice of materials to make the annular ring of back iron material, thereby again requiring special and costly material. Moreover, use of an encapsulation layer of cured resin is probably required to provide sufficient rotor disk rigidity at high speeds.

It is an objective of the present invention to disclose a rotor for an axial flux machine, and corresponding production method, that resolves one or more of the above-described shortcomings of the prior art solutions. More particularly, it is an objective to present a rotor disk design that allows for high rotational speeds, while contributing to an improved electromagnetic performance, reduced material cost and improved rotor cooling.

### Summary of the Invention

According to a first aspect of the present invention, the above identified objectives are realized by a rotor disk for an axial flux machine defined by claim 1, the rotor disk comprising
- a central axis in axial direction corresponding to the rotational axis of the axial flux machine when mounted;
- magnets adapted to generate a magnetic flux in axial direction;
- a back iron adapted to close the pathway of the magnetic flux, the back iron comprising a front side and opposing back side, and the magnets being attached to the front side of the back iron,
- wherein the back iron is provided as a wound coil comprising multiple turns, the back iron coil being mounted on an inner hub,
wherein:
- the back side of the back iron coil is, at least partially, exposed; and
- the rotor disk comprises a retention system providing structural strength to the back iron coil, the retention system comprising
   ∘ a retention ring placed around the back iron coil, thereby retaining the turns of the back iron coil by compressing the turns in radial direction,
      and/or
   ∘ one or more radially extending welds, thereby retaining the turns of the back iron coil by welding consecutive turns to one another.

Thus, the invention concerns a rotor disk for an axial flux machine. An axial flux machine may equally be referred to as, for example, an axial air-gap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. During operation, the stator remains stationary, while the rotor, being mounted on the shaft, rotates during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk.

The stator comprises a plurality of stator elements, of which the arrangement is typically rotationally symmetrical with respect to the central axis. Every stator element comprises a coil wound around a core. Every rotor disk comprises magnetic material, typically permanent magnets, generating an axial magnetic flux. During motor operation, the rotor is driven by magnetic fields generated by stator currents running in the coils, while in generator condition currents are induced in the stator coils due to the rotation of the rotor.

The rotor disk further comprises a back iron, which is typically ring-shaped. The rotor magnets are attached to the back iron, with their front side facing the air gap and their back side mounted to the back iron. The side of the back iron carrying the magnets is referred to as the front side of the back iron, while the opposing side is referred to as the back side. The back iron material is adapted to convey the magnetic flux between adjacent magnets, thereby closing the pathway of the magnetic flux. Suitable materials are, for example, ferromagnetic steel types, such as electrical steel. The back iron is provided as a wound coil, meaning that it was obtained by winding a strip of material, resulting in multiple turns or windings, also referred to as laminations. The back iron is thus laminated, thereby reducing eddy currents. The last turn defines the outer circumference and outer diameter of the back iron coil, and the first turn defines the inner circumference and inner diameter of the coil. The back iron coil is mounted on a hub, the hub making part of the rotor and being positioned at the inner side of the back iron coil.

The back side of the back iron coil is at least partially exposed. This means that the side of the back iron coil facing away from the magnets is either completely exposed or uncovered, thus being free from any additional element, or is partly exposed or uncovered. The latter implies that some structural element may be attached to the back side of the back iron coil, but that structural element does not cover the whole surface area of the back side, and some portions of the back side remain uncovered. Thus, no supporting member or support disk is present that would cover the whole back side of the back iron coil.

The rotor disk comprises a retention system providing structural strength to the back iron coil. This means that some means are used to ensure structural strength of the back iron coil itself, without merely relying on supporting structures added or attached to the back iron coil. The retention system may comprise a retention ring, or may comprise one or more radially extending welds, or may comprise both a retention ring and one or more radially extending welds. In either of these embodiments, the retention system is adapted to retain the turns of the back iron coil, i.e. to keep the individual turns together in such a way that the back iron coil acts as a disk having sufficient structural strength on its own. In a preferred embodiment, the back iron coil has been obtained by winding a strip of material at high pretension, e.g. a tangential pretension of 10 MPa or higher. For example, coiling may have been done under pretension directly onto a rotor hub, without requiring any transfer between a separate mandrel and the rotor hub after coiling. The use of a high pretension during coiling results in a stiff back iron coil, while the retention system enables to conserve the applied pretension after coiling.

In an embodiment, the retention system comprises a retention ring. The retention ring is placed around the back iron coil, thereby retaining the turns of the back iron coil by compressing the turns in radial direction. Thus, the retention ring is arranged in such a way that it pushes the individual turns of the back iron coil together in radial direction, thereby holding together the multiple turns and keeping any pretension applied during coiling. In other words, the ring cannot merely be loosely placed around the back iron coil, wherein the ring would not push the turns together and no pretension at all would be present. For example, the retention ring may be press fitted over the back iron coil with an interference fit. The press fit ensures that the turns are compressed in radial direction, while friction between the turns also ensures axial retention of the turns. The retention ring is e.g. made of a metal or a composite material, for example carbon fibre, glass fibre or aramid fibre. In another embodiment, a retention ring may be wound in place, e.g. using carbon fibre and a resin, such that the ring is created during winding around the back iron coil. In an embodiment, the retention ring is only positioned around the back iron coil, and is not located around the magnets. The latter implies that the height of the retention ring is such that it covers the height or thickness of the back iron coil, but does not cover the height or thickness of the magnets, the height or thickness being measured in axial direction. In another embodiment, the retention ring is positioned around both the back iron coil and the magnets, i.e. its height is sufficiently large to cover both the height or thickness of the back iron coil and the magnets.

In another embodiment, the retention system comprises one or more radially extending welds, thereby retaining the turns of the back iron coil by welding consecutive turns to one another. Thus, one or more weld lines are applied, the weld lines extending in radial direction with respect to the ring-shaped back iron coil. The radial welds result in consecutive individual turns to be welded to one another, thereby holding together the multiple turns and keeping any pretension applied during coiling. The radial welds may be provided at the front side of the back iron coil, or at the back side, or at both the front side and back side. In an embodiment, some or all of the radial welds are merely provided as weld lines, thereby welding together consecutive turns but not being used to attach any elements to the back iron coil. In another embodiment, some or all of the radial welds not only serve to weld together consecutive turns, but at the same time are used to attach radial elements to the back iron coil. The latter implies that elements, each of them extending in radial direction, are welded to the back iron coil, at the front side and/or back side of the coil. For example, the radial elements may serve as structural elements or ribs, or may serve as locking features for retaining the rotor magnets.

In summary, the retention system, embodied as retention ring or radial welds, enables to hold together the turns of the back iron coil and to keep any pretension at which the coil was wound. In this way, a back iron coil is obtained that is self-supporting, thus providing its own structural strength and stiffness. Therefore, no additional supporting member, like a full support disk in which the back iron coil is recessed, is required to ensure sufficient structural strength and stiffness.

Not using such a support disk as supporting member has the advantage that a thicker back iron can be used for the same rotor weight, thereby contributing to an improved electromagnetic performance. Or, in other words, a lower total weight of the rotor becomes possible for the same amount of back iron material. Another advantage is that the material cost is reduced, as no support disk made of an expensive stainless steel is needed. Finally, cooling of the rotor disk, typically done from the back side of the rotor disk, is facilitated, due to a reduced thermal resistance towards the back side of the rotor disk.

The invented rotor design thus results in the required structural strength and stiffness of the rotor disk, to allow for high rotational speeds, e.g. up to 16000 rpm or even higher. Axial flux motors spinning at a very high speed in a reliable way therefore become possible, thus allowing for a large power and power density.

Optionally, according to claim 2, the rotor disk comprises radially extending reinforcement elements attached to the back iron, the reinforcement elements being placed between the magnets at the front side of the back iron, and/or being placed at the back side of the back iron. This implies that the rotor disk comprises a reinforcement structure, which comprises reinforcement elements or structural elements extending in radial direction. Any of the reinforcement elements is connected to one of the flat surfaces of the back iron coil, either the back side or the front side. In an embodiment, radial reinforcement elements may be present at both the front and back side of the back iron coil. If attached to the front side of the back iron coil, a radial reinforcement element is located between two adjacent magnets. The radial reinforcement elements are attached to the back iron coil e.g. by welding, gluing, or in any other way. In an embodiment, the radial reinforcement elements merely serve to provide additional stiffness to the back iron coil. For example, radially extending ribs or structural elements are attached to the front and/or back side of the back iron coil. In another embodiment, some or all of the reinforcement elements may at the same time serve to axially retain the magnets. For example, block-shaped retainers or a resilient type of retainers wherein a flexible portion is used to clamp the magnets, the retainers extending in radial direction, may be placed between the magnets at the front side of the back iron coil, thereby axially retaining the magnets.

Optionally, according to claim 3, the radially extending reinforcement elements are welded to the front side and/or back side of the back iron coil. In an embodiment, the retention system comprises the retention ring placed around the back iron coil, and block-shaped or V-spring retainers, acting as locking features for the magnets, are welded to the front side of the back iron coil, while the back side of the back iron coil remains completely uncovered. In another embodiment, the retention system comprises the retention ring, block-shaped or V-spring retainers are glued to the front side of the back iron coil, and a structure having radial elements is welded to the back side of the back iron coil. In yet another embodiment, no retention ring is present, block-shaped or V-spring retainers are welded to the front side of the back iron disk, and additional radial weld lines are provided at the front side, while the back side of the back iron coil remains fully uncovered or has a welded structure comprising radial elements.

Optionally, according to claim 4, the retention system comprises one or more radially extending welds applied at the front side of the back iron coil, wherein at least some of the radially extending welds each are used for attaching one of the radially extending reinforcement elements to the front side of the back iron coil. This implies that the front side of the back iron coil comprises radial weld lines, of which one or more correspond to radial welds used to attach radial reinforcement elements to the back iron coil. In an embodiment, radially extending reinforcements elements are connected to the front side of the back iron coil by means of welding, and no other radial weld lines are present at the front side of the back iron coil. In another embodiment, radial reinforcement elements are welded to the front side of the back iron coil, and additionally other radial weld lines are present at the front side of the back iron coil.

Optionally, according to claim 5, the radially extending reinforcement elements are welded to the hub. This implies that the radial reinforcement elements are not only welded to the back iron coil, but are also welded to the hub. For example, the hub comprises a flat surface aligned with the flat surface of the front side of the back iron coil, and the radial weld line for connecting the reinforcement element runs over both flat surfaces. Thus, an additional connection is being formed, connecting the reinforcement element to the hub. This contributes to further increasing the structural strength and stiffness of the back iron coil.

Optionally, according to claim 6, at least some of the radially extending reinforcement elements serve as locking features, being placed between the magnets at the front side of the back iron coil and adapted to clamp the magnets, thereby axially locking the magnets. This means that radial elements are present at the front side of the back iron coil which do not only serve as reinforcement structure, but also serve to axially keep the magnets in place. The radially extending locking features are placed between the magnets, in such a way that the magnets are clamped against the back iron by the locking features. Typically, each of the magnets is clamped by two radial locking features on opposing sides, every locking feature thus being located between two adjacent magnets. Axial locking of the magnets is thus done via mechanical locking features, for example block shaped retainers extending in radial direction or V-springs clamping the magnets. Optionally, an adhesive may be added to retain the magnets. An advantage of using mechanical locking features for retaining the magnets, is that their characteristics are not as temperature dependent as an adhesive, such that reliability, robustness and durability are increased.

Optionally, according to claim 7, each of the locking features comprises a flexible portion in contact with the adjacent magnets, thereby clamping the magnets due to elastic deformation or resilience of the flexible portion. A flexible portion refers to an element made of a flexible, bendable material, which under an elastic deformation tends to return to its original shape, thereby showing resiliency or exerting a spring force. For example, every locking feature comprises two angled side surfaces connected to a bottom surface. The bottom surface may be connected to the back iron, e.g. by means of gluing or welding, while each of the side surfaces may engage an edge of a neighbouring magnet. Each of the angled side surfaces may bend in a direction away from the bottom surface. Due to resiliency or elastic properties, the angled side surfaces can provide a spring force, thereby pressing down on the edge of the magnet. For example, each of the locking features is provided as V-shaped metallic structure, e.g. a V-shaped metal sheet or V-spring, having two upwardly bent plates, each of the plates being in contact with an edge of the magnets and exerting a clamping force on the magnet's edges due to resiliency. While clamping, the locking features thus are in an elastic deformation in order to keep a compressive load on the magnets, thereby axially locking the magnets. For example, the locking feature may be a standard V-spring or a skewed V-spring. In an embodiment, multiple V-springs may be connected into a single, star-shaped part or star. The V-shaped metal sheet needs to be dimensioned according to the rotor and the magnet dimensions. In particular, the angle may be finely tuned so that the compression load from the V-shape guarantees the locking of the magnets. In an embodiment, the magnets may have a sloped side edge, a chamfer or a step, as a feature for the flexible portion to clamp on. Thus, the angled side surface of the locking feature is in contact with the sloped side edge of the magnet, thereby allowing for an optimal contact or clamping surface. During assembly, a magnet may be inserted from the radial direction. In a preferred embodiment, any of the magnets is movable in radial direction while being mounted between two locking features. This means that a magnet can still slide in the radial direction after being mounted between two locking features. In this way, during use of the rotor in the axial flux machine, the back iron can expand relative to the magnet due to differences in thermal expansion.

An advantage of using this type of resilient locking features is that the magnets are held in position firmly due to the spring force exerted by the flexible portion, independent of an adhesive. Compared to using an adhesive for attaching the magnets, wherein the adhesive bond strength is unreliable at high speeds and temperature dependent, a more reliable, robust and durable connection is obtained. Moreover, a stable performance regardless of temperature variations is obtained, as the magnets may still move radially under the spring or clamp. Furthermore, frictional contacts between the magnets and the locking features cause a damping effect, thereby improving NVH performance (Noise, Vibration, and Harshness). In an embodiment, an extra polymer, e.g. an elastic adhesive, or a polymer sheet like a Nomex sheet, may be added to provide an additional cushioning or damping effect, thereby further improving NVH performance. The additional polymer may be placed between the back iron and the magnets, and/or between the back iron and the locking features, and/or between the magnets and the locking features.

It is clear that there is no structural or functional relation between - on the one hand - the resilient type of locking features, the locking features extending in radial direction and comprising a flexible portion to clamp the magnets, and - on the other hand - other features of the rotor design included in claim 1. In particular, the presence of this type of locking features is not linked or related to how structural strength and stiffness of the rotor disk is obtained or to how the back iron is designed. Thus, this type of resilient locking features may as well be used in a rotor disk for an axial flux machine not comprising a retention system given as a retention ring or radially extending welds, thereby still allowing to lock the magnets in a more advantageous way. For example, the resilient type of locking features may be used in a rotor disk wherein structural strength and stiffness is obtained by means of a supporting member or support disk that covers the complete back side of the back iron, e.g. the back iron coil being recessed into the support disk. Also here, the use of the resilient locking features brings the advantage of a more temperature-independent and reliable locking and an improved NVH performance. The feature of the resilient type of locking feature herein disclosed, is therefore a further independent aspect of the invention, the feature not being only disclosed in combination with the other features of claim 1.

Optionally, according to claim 8, the retention system comprises the retention ring, and the retention ring is press fitted over the back iron coil with an interference fit. An interference fit refers to the fact that, in unassembled condition, the inner diameter of the retention ring is slightly smaller than the outer diameter of the back iron coil. The interference fit therefore allows to compress the windings of the back iron coil in radial direction, and to preserve any pretension applied during winding. Depending on the tightness of the interference fit, the amount of compression or pretension exerted may be varied.

Optionally, according to claim 9, the outer circumference of the back iron coil is machined, such that the back iron coil has a round outer diameter enabling an interference fit with the inner diameter of the retention ring. After winding the strip of material to obtain a back iron coil, the outside diameter of the back iron coil will not have a perfectly smooth round diameter, but will have a step due to the lamination thickness related to the strip end. In order to obtain a round outer diameter of the back iron coil, that allows for an optimal press fit of the retention ring, the outside diameter of the back iron coil may be machined to a smooth finish. Machining refers to cutting away or removing material to obtain a desired shape or size, e.g. by means of turning, milling or any other technique. In particular, the outer circumference of the back iron coil is machined, thereby dimensioning the outer diameter of the coil to enable an interference fit with the inner diameter of the retention ring.

Optionally, according to claim 10, the back iron coil comprises a circumferential weld, such that the outer turn of the back iron coil is welded to the previous turn, over at least a portion of the circumference of the outer turn. The back iron coil comprises multiple consecutive turns. By means of the circumferential weld, the last turn and penultimate turn are connected to one another. A circumferential weld refers to the presence of a weld line that extends over the whole or a portion of the circumference of both turns. In other words, at least one circumferential weld line is present, being more extensive than when only a spot weld would be used to connect the outer strip end to the previous turn. In an embodiment, the outer turn is welded to the previous turn, over its complete circumference. This means that a continuous circumferential weld line is present, extending over the whole circumference. In another embodiment, the outer turn is welded to the previous turn, over a substantial portion of its circumference, e.g. by means of a continuous weld line extending over at least one third or half of its circumference. In yet another embodiment, multiple separate circumferential weld lines may be present, thereby connecting the outer turn to the penultimate turn over, in total, e.g. at least one third or half of the circumference. Applying such a circumferential weld has the advantage that separation of the laminations is avoided during machining of the outer diameter of the back iron coil.

Optionally, according to claim 11, the retention system comprises the retention ring, and the retention ring comprises a first portion placed around the back iron coil, adapted to radially retain the back iron coil, and a second portion placed around the magnets, adapted to radially retain the magnets. This means that the height or thickness of the retention ring, measured in axial direction, is such that it covers both the thickness of the back iron coil and the thickness of the magnets. Placing the retention ring around the back iron coil and the magnets, has the advantage that centrifugal loads exerted by the magnets at high speed are counteracted, thereby contributing to radially retain the magnets.

Optionally, the hub comprises one or more end stop features, positioned at the outer circumference of the hub, such that the magnets are pushed against the respective end stop features by the retention ring. An end stop feature is for example a raised edge or step, located at the outer edge of the hub. The presence of end stop features prevents the magnets from being pushed in too far to the inside, so that the radial position of the magnets is guaranteed. This is particularly useful in combination with a retention ring being placed around the magnets, wherein the retention ring pushes the magnets radially inwards.

Optionally, the back iron coil is provided as a wound strip of back iron material, for example a wound strip of electrical steel. In an embodiment, one end of the strip, located at the inner circumference of the coil, is connected to the hub, e.g. by means of a non-releasable connection, e. g. by means of welding.

According to another aspect of the present invention, the above identified objectives are realized by a method for assembling a rotor disk for an axial flux machine, defined by claim 12, the method comprising:
- providing a hub;
- providing a strip of back iron material;
- connecting an end of the strip to the hub, for example by means of welding;
- winding or coiling the strip onto the hub while applying a tangential pretension on the strip, thereby forming a back iron coil comprising multiple turns;
- retaining the turns of the back iron coil by
   ∘ placing a retention ring around the back iron coil, thereby compressing the turns in radial direction,
      and/or
   ∘ welding consecutive turns of the back iron coil to one another by means of one or more radially extending welds
- attaching magnets to one of the opposing sides of the back iron coil, this side being the front side of the back iron coil.

A strip of back iron material is for example a strip of electrical steel. During assembly, one end of the strip is first connected to the rotor hub, for example by means of a non-releasable connection, e. g. by means of welding. Next, the back iron coil is wound at high tangential pretension, so as to obtain a back iron coil being sufficiently stiff on its own. Special high-strength electrical steel may be used for this. Afterwards, a retention ring is placed and/or one or more radial welds are applied, to retain the turns and to preserve the pretension as applied during winding. The method also comprises connecting the magnets to the back iron coil, which may be done before, after, or in an alternating way with applying the retention system.

In a preferred embodiment, the back iron coil is wound directly on a rotor hub, thus not being wound on a separate mandrel. In assembled condition, the rotor hub makes part of the rotor of the axial flux machine, i.e. it is connected to the shaft of the axial flux motor. The assembly method may thus comprise a step of connecting the rotor hub to the shaft, which may be done after or before winding the back iron coil on the rotor hub. Winding or coiling the coil directly on the rotor hub has the advantage that a high pretension can be applied and preserved; conversely, winding the coil at a separate mandrel would require a transfer of the coil to the rotor hub after winding, thereby impeding that pretension as applied during winding is optimally preserved.

Optionally, according to claim 13, the tangential pretension applied during winding or coiling is at least 10 MPa.

Optionally, according to claim 14, the method further comprises:
- welding the outer turn of the back iron coil to the previous turn, over at least a portion of the circumference of the outer turn;
- machining the outer circumference of the back iron coil, thereby obtaining a round outer diameter enabling an interference fit with the inner diameter of the retention ring;
- press fitting a retention ring around the back iron coil with an interference fit.

Optionally, according to claim 15, the method further comprises:
- welding reinforcement elements to the front side of the back iron coil, the reinforcement elements extending in radial direction;
- attaching the magnets between respective adjacent reinforcement elements.

### Brief Description of the Drawings

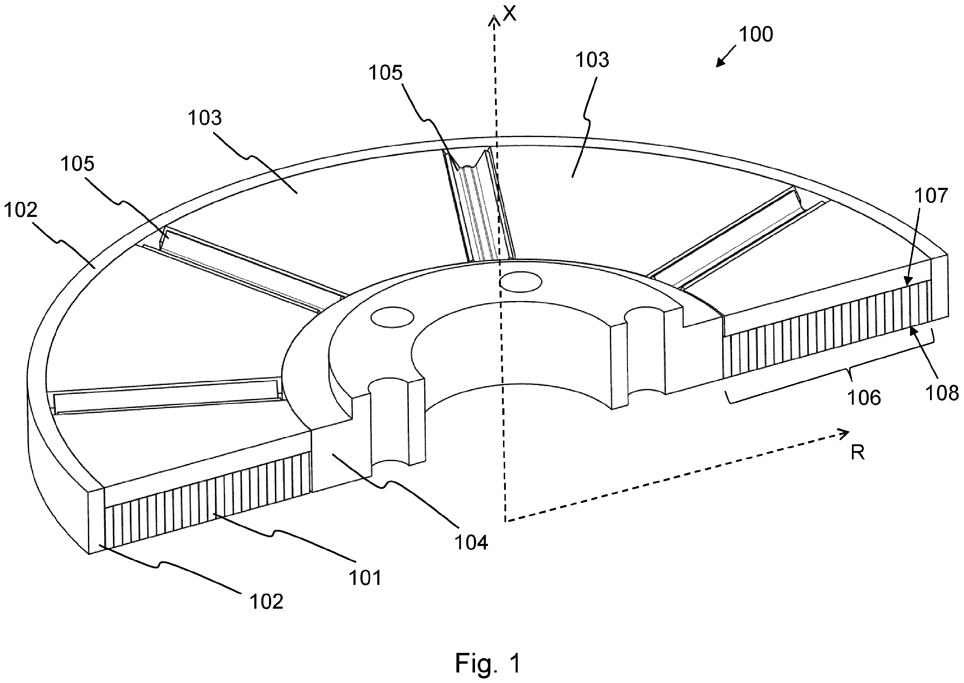

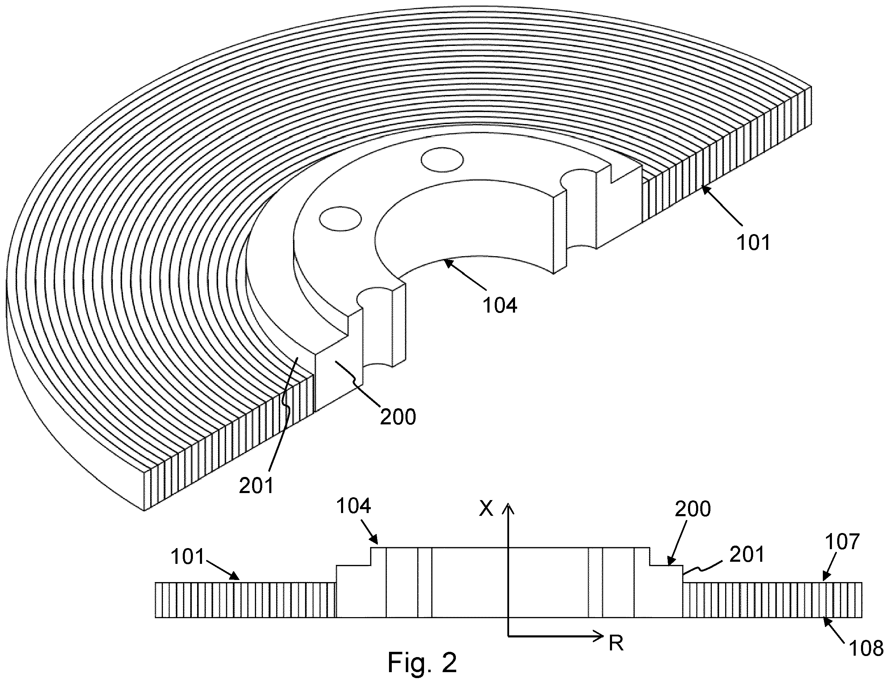

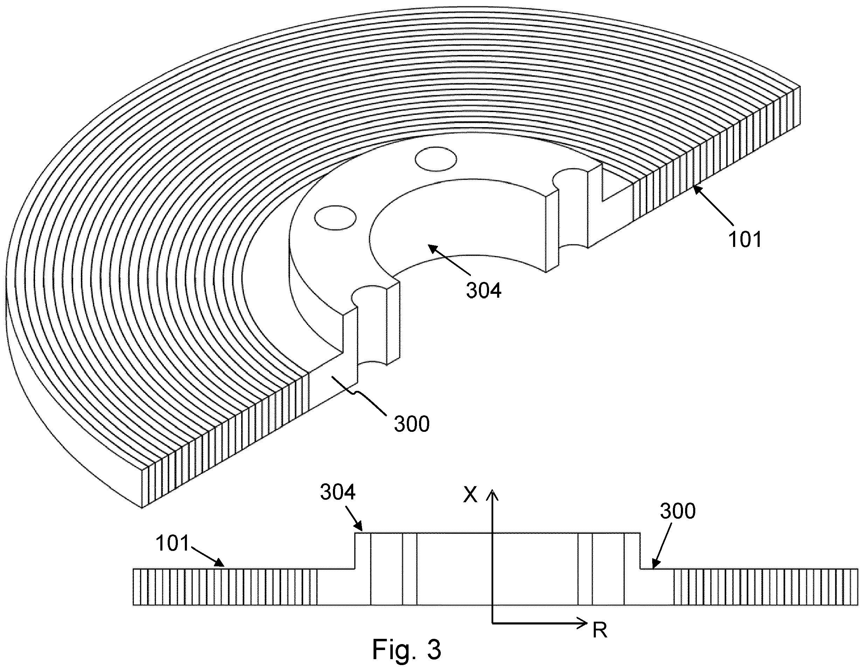

Fig. 1 illustrates a rotor disk for an axial flux machine, according to a first embodiment of the invention, wherein a retention ring is placed around the back iron coil. Fig. 2 and Fig. 3 illustrate two different designs of the rotor hub, which may be used in the first embodiment, or any other embodiment of the invention.

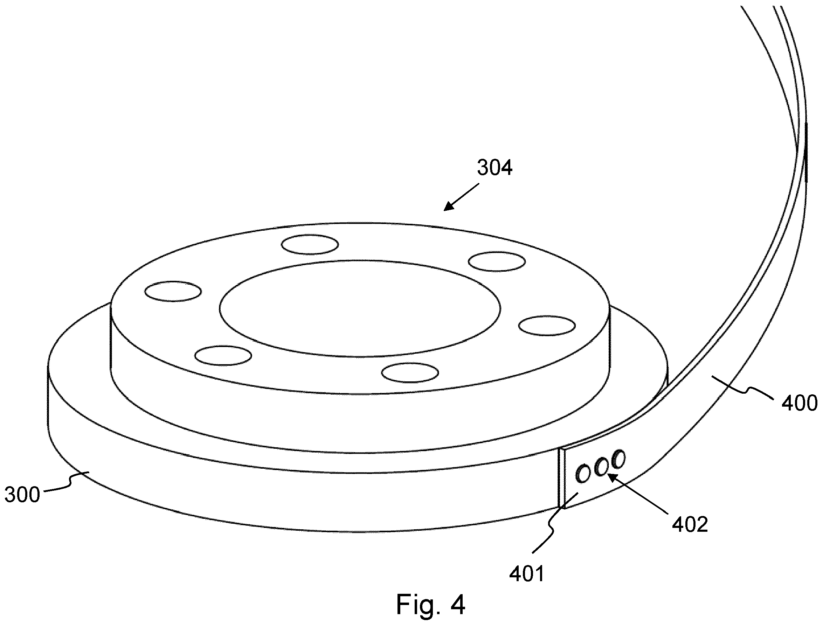

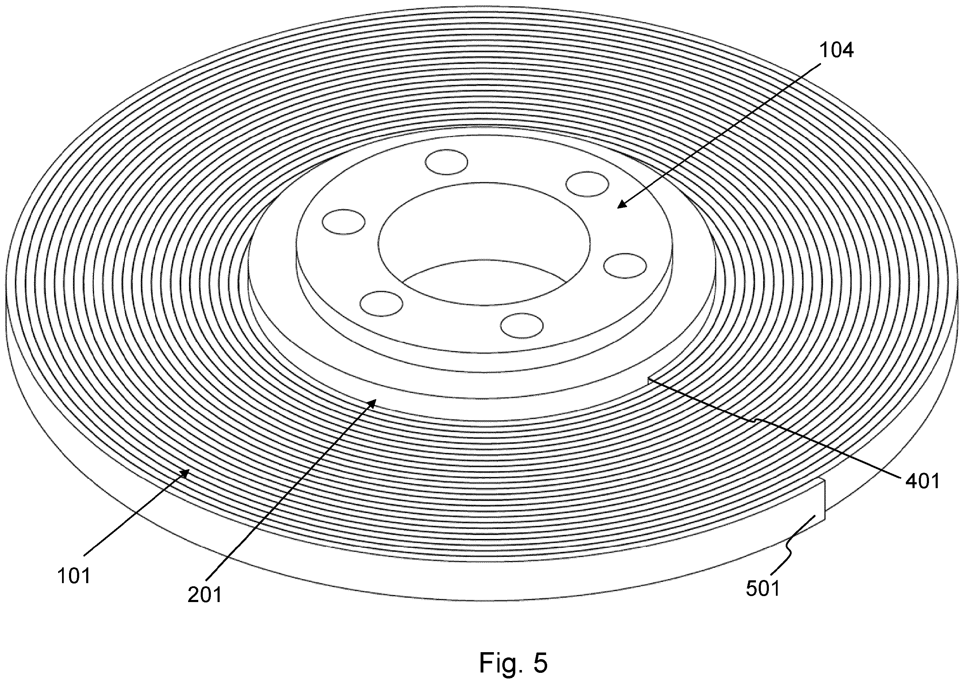

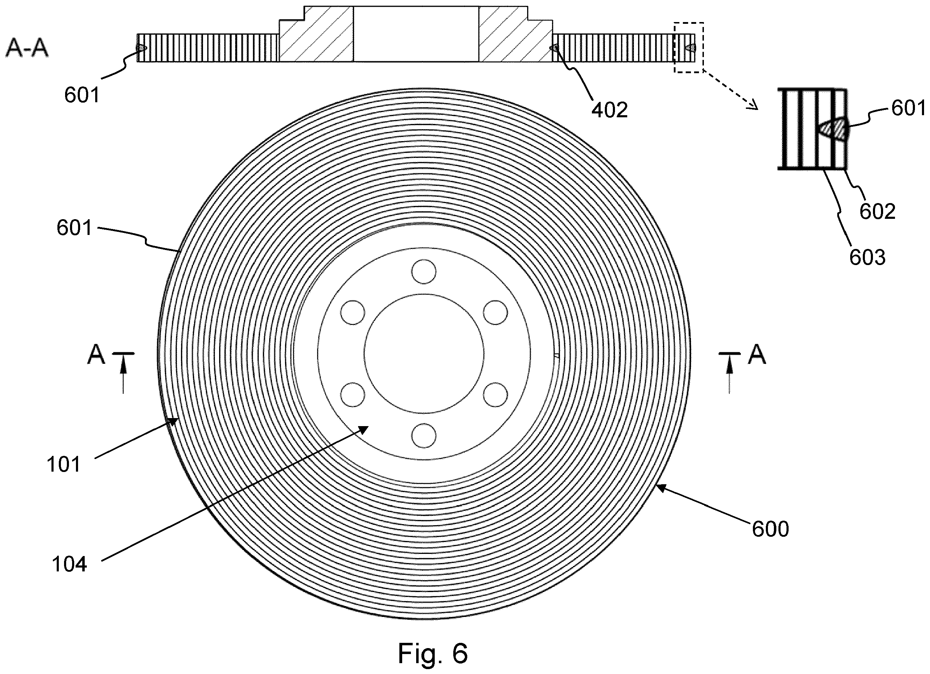

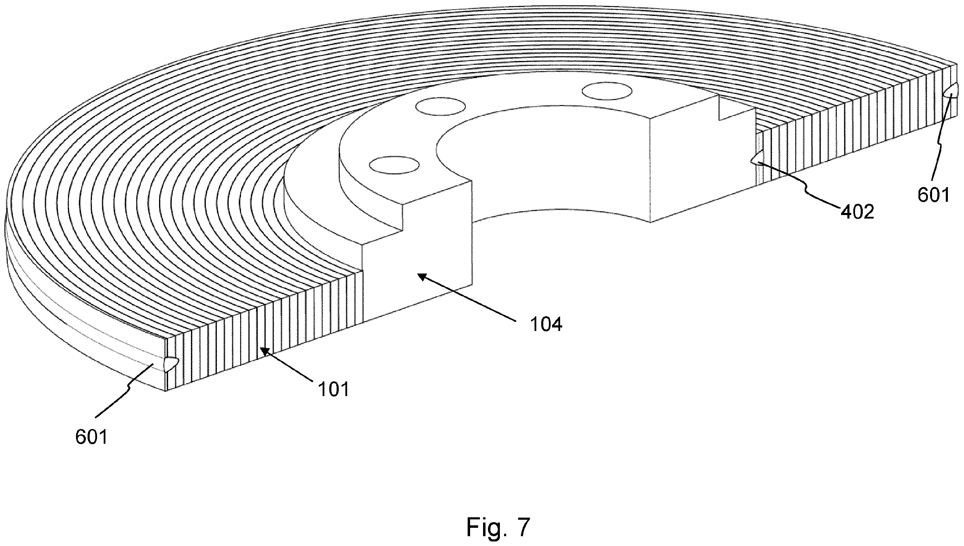

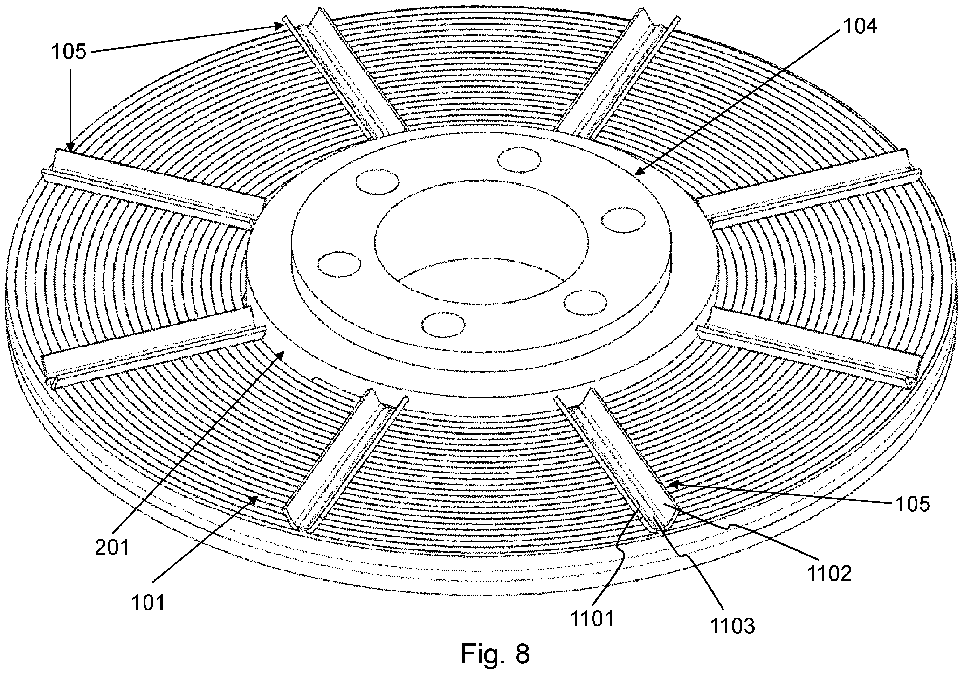

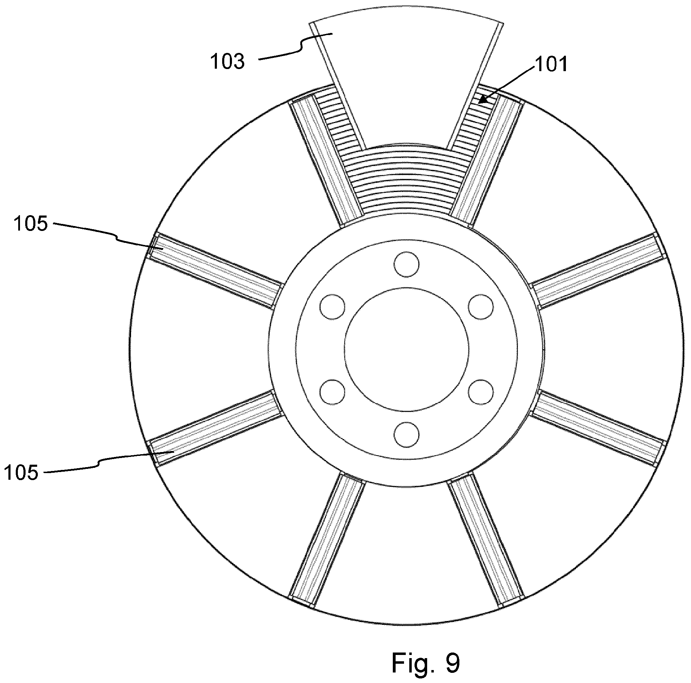

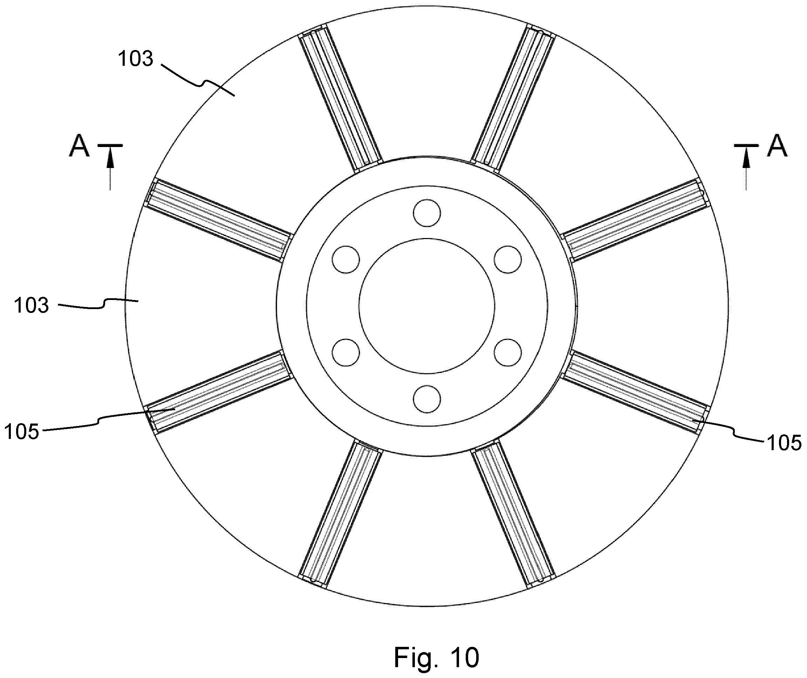

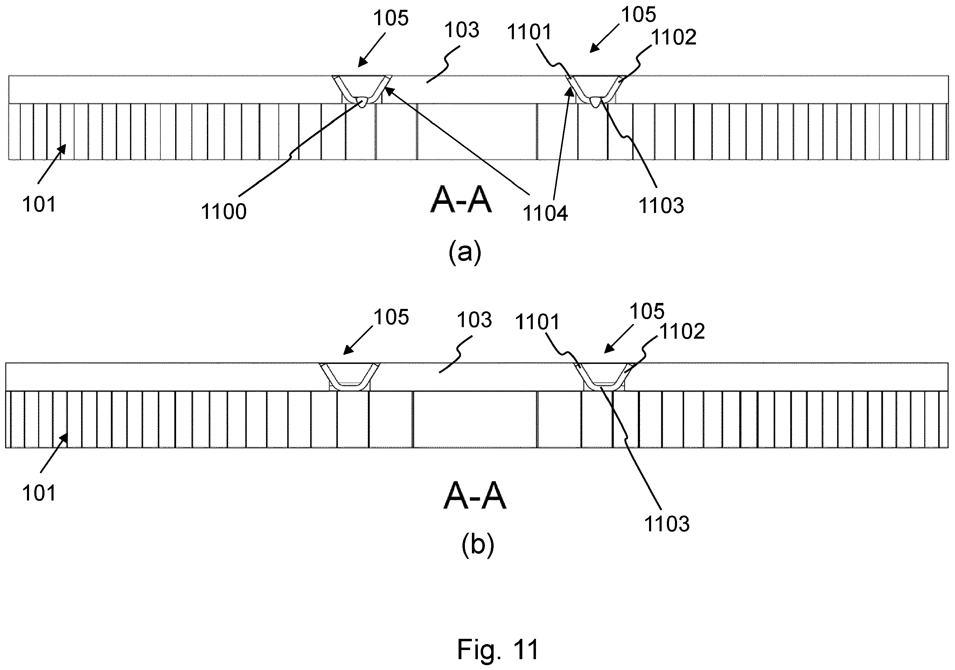

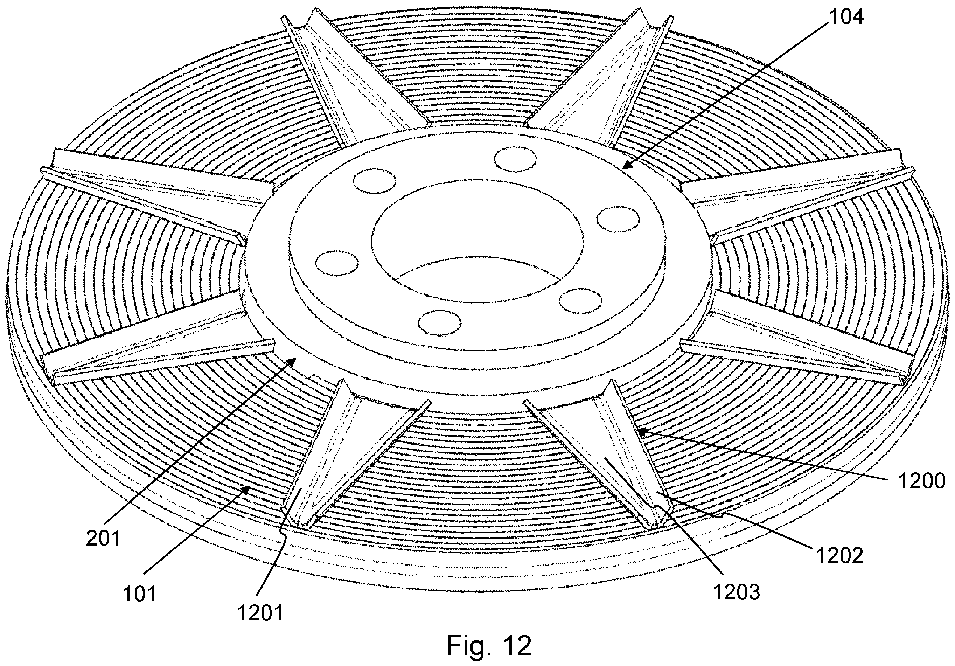

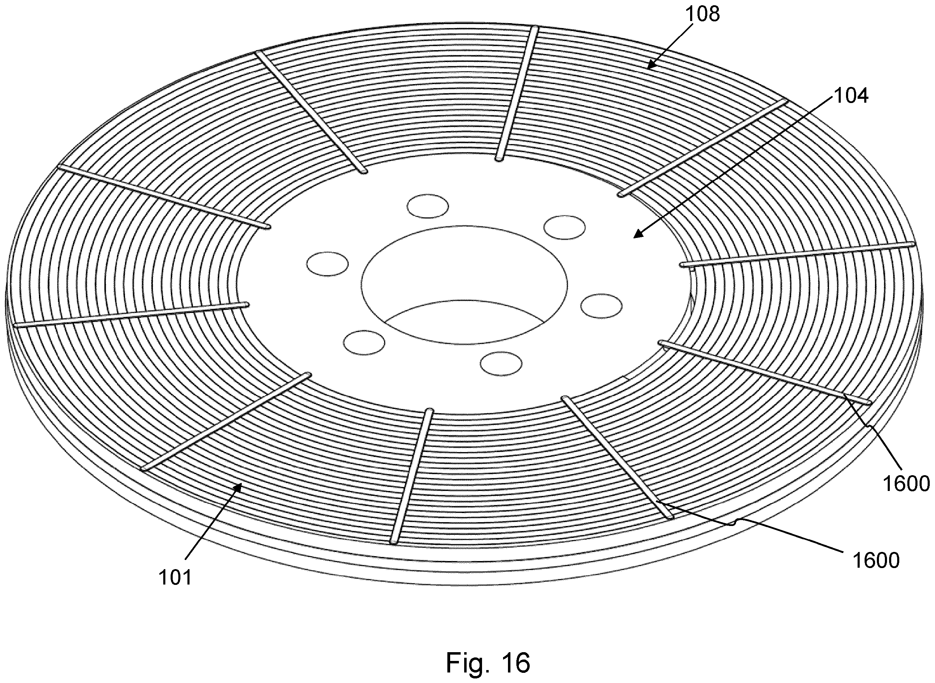

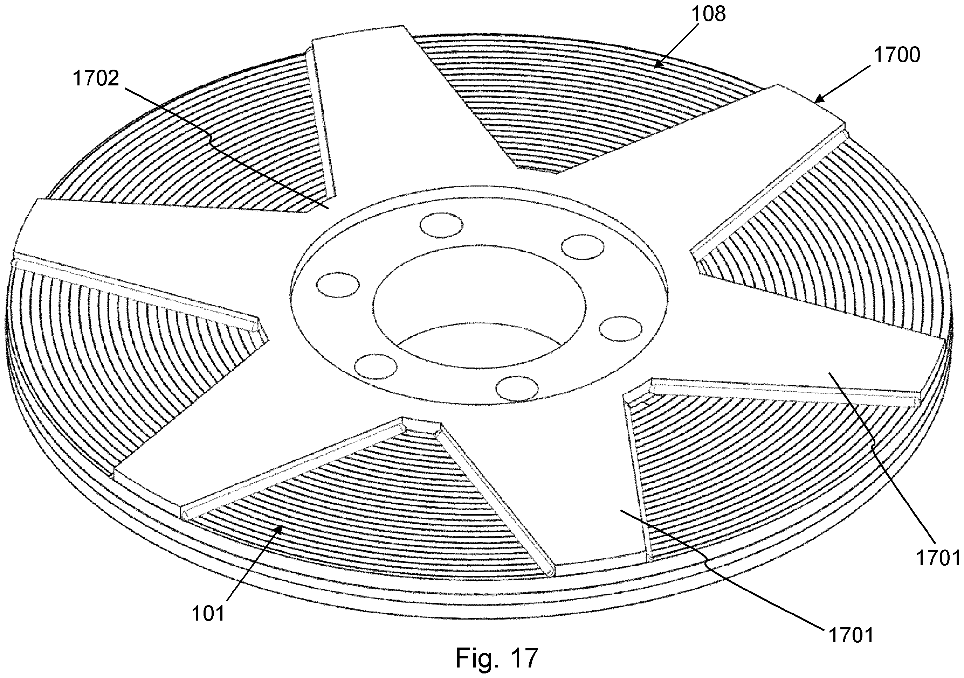

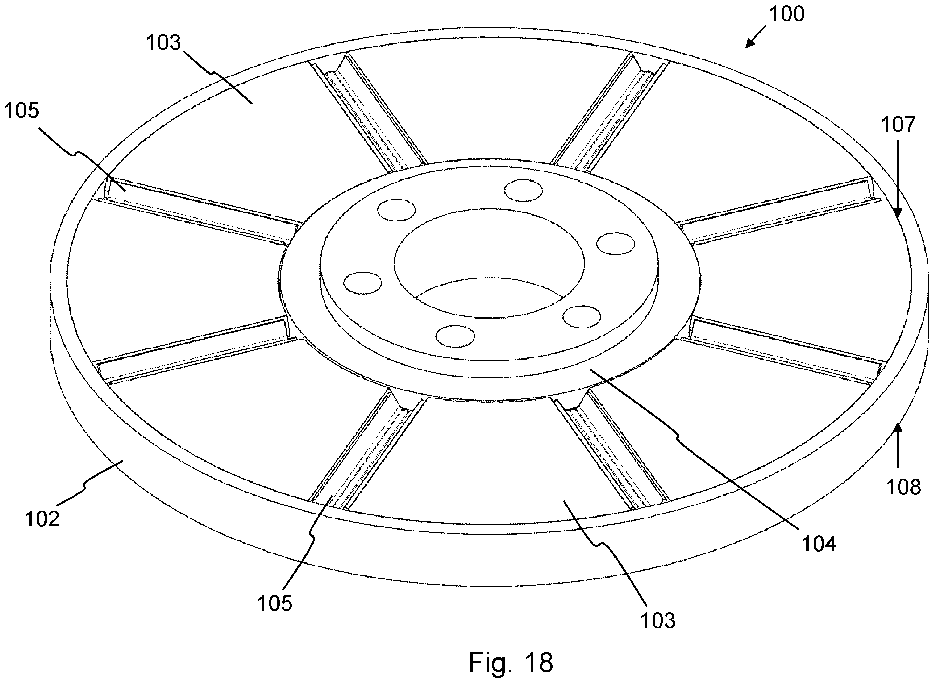

Fig. 4 to Fig. 18 further illustrate the rotor disk according to the first embodiment of the invention, and the steps comprised in a method for assembling a rotor disk, according to an embodiment of the invention. In particular, Fig. 4 illustrates the step of welding a first end of the strip of back iron material to the rotor hub. Fig. 5 shows the back iron coil obtained after coiling the strip of back iron material on the hub. Fig. 6 and Fig. 7 illustrate how a circumferential weld is provided at the outer circumference of the back iron coil, and how the outer circumference is machined. Fig. 8 illustrates the use of a resilient type of locking features for retaining the magnets. Fig. 9 illustrates the insertion of magnets between the locking features during assembly, and Fig. 10 gives a front view showing the obtained configuration after magnets have been inserted. Fig. 11 gives a cross section, illustrating the interaction of the magnets and the locking features. Fig. 11(a) illustrates a configuration wherein the locking features are welded to the back iron coil, and Fig. 11(b) illustrates a configuration wherein the locking features are glued to the back iron coil. Fig. 12 to 15 show various possible designs of resilient locking features. Fig. 16 illustrates the presence of radial weld lines at the back side of the back iron coil. Fig. 17 illustrates the presence of a structural element provided at the back side of the back iron coil. Fig. 18 illustrates the presence of a retention ring, being placed around the back iron coil and the magnets.

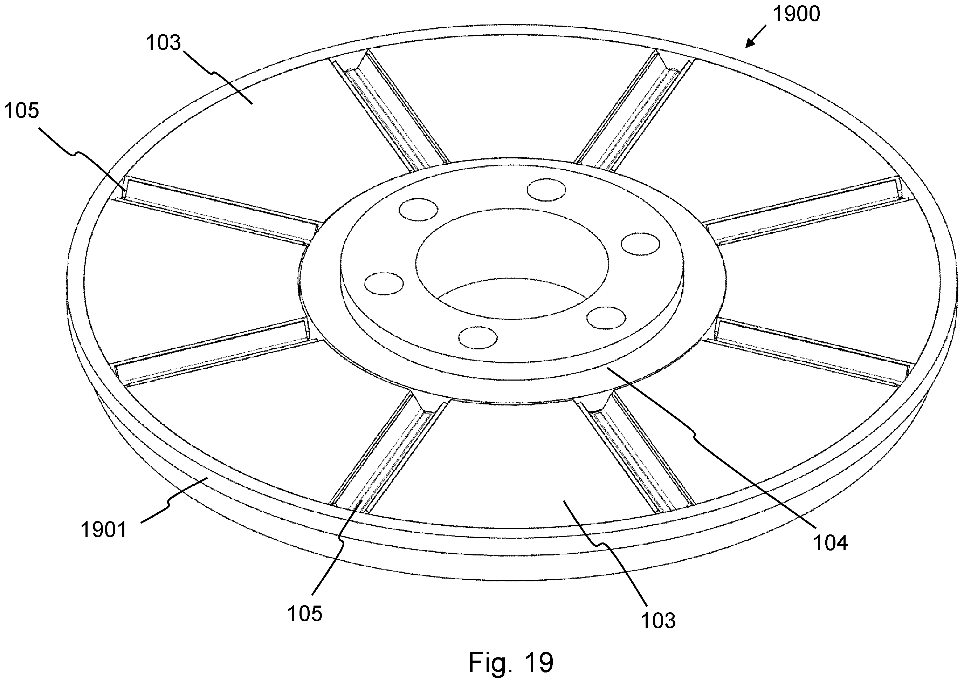

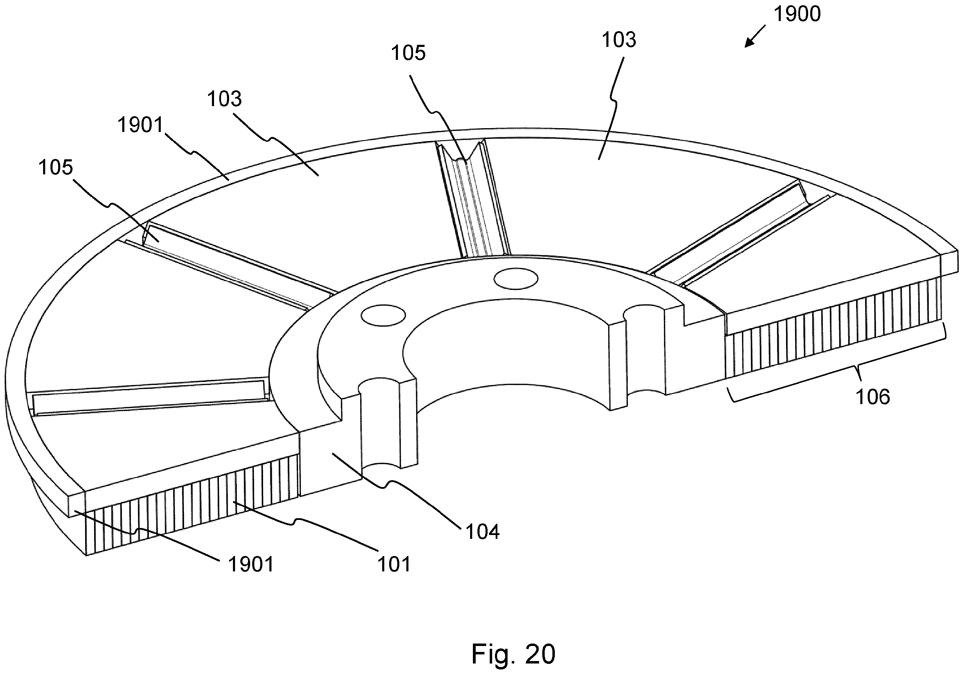

Fig. 19 and Fig. 20 illustrate a rotor disk for an axial flux machine, according to a second embodiment of the invention, wherein the retention ring is only placed around the magnets but not around the back iron coil.

### Detailed Description of Embodiment(s)

Fig. 1 illustrates a rotor disk 100 for an axial flux machine. In Fig. 1, a three-dimensional view is given, which has been intersected, such that only one half of the rotor disk 100 is shown. The three-dimensional view of the full rotor disk 100 is given in Fig. 18. The rotor disk 100 comprises a central axis extending in axial direction X. The radial direction is indicated as 'R' in Fig. 1. The rotor disk 100 comprises a back iron 101, which is provided as a wound coil comprising multiple turns 106. Magnets 103 are attached to the front side 107 of the back iron coil 101 by means of locking features 105. The back side 108 of the back iron coil 101 is fully or partially exposed. A fully exposed back side 108 means that the back side 108 is completely uncovered, and all turns 106 are completely visible from the back side in assembled stated of the rotor disk 100. A partially exposed back side 108 implies that some structural element is present at the back side, thereby partly covering the turns 106. For example, a reinforcement structure 1700, as illustrated in Fig. 17, is attached to the back side 108 of the back iron coil 101.

The back iron coil 101 is mounted on a rotor hub 104. The rotor hub 104 is adapted to be connected to the shaft in assembled condition of the axial flux machine. The back iron coil 101 is obtained by winding or coiling a strip of material, e.g. electrical steel, on the hub 104, while applying a tangential pretension. As is illustrated in Fig. 4 to Fig. 7, the back iron coil 101 comprises a spot weld 402, connecting a first end 401 to the hub 104, and a circumferential weld 601 at its outer circumference 600.

The rotor disk 100 comprises a retention system, providing structural strength to the back iron coil 101. In the embodiment of Fig. 1, the retention system comprises a retention ring 102, for example a carbon fibre ring. The retention ring 102 is placed around the back iron coil 101, and compresses the turns 106 in radial direction, thereby retaining the turns 106 and keeping the pretension as applied during winding. In the shown embodiment, the retention ring 102 is press fitted over the back iron coil 101 with an interference fit. For this purpose, the back iron coil 101 has a machined round outer circumference, being somewhat larger than the inner diameter of the retention ring 102 in unassembled condition. In the shown embodiment, the retention ring 102 comprises a first portion placed around the back iron coil, adapted to radially retain the back iron coil 101, and a second portion placed around the magnets 103, adapted to radially retain the magnets 103. The height of the retention ring 102, measured in X-direction, thus covers the height of both the back iron coil 101 and the magnets 103.

In the embodiment of Fig. 1, the rotor disk 100 comprises reinforcement elements 105, each of the elements 105 being attached to the back iron coil 101 and extending in radial direction R. The reinforcement elements 105 act as radial ribs or spokes, thereby contributing to the stiffness of the back iron coil 101. Each of the reinforcement elements 105 is placed between two adjacent magnets 103 and is adapted to clamp the magnets 103, thereby axially locking the magnets 103. Thus, in the shown embodiment the reinforcement elements 105 at the same time serve as locking features. In particular, in the shown embodiment a resilient type of locking features 105 is used, wherein clamping of the magnets relies on elastic deformation or resilience of a flexible portion comprised in the locking features. The resilient locking features 105, and other variants thereof, will be described in further detail underneath, in relation to Fig. 8 to 12.

The radial reinforcement elements 105 are attached to the back iron coil 101, e.g. by means of gluing or welding. In the latter case, each of the reinforcement elements 105 may be attached to the back iron coil 101 by means of a radial weld. As such, the rotor disk 100 comprises radial weld lines, which cause consecutive turns 106 to be welded to one another, thereby further contributing to retain the turns 106 of the back iron coil 101. In other words, in this case, the retention system comprises both the retention ring 102 and radial welds, both of them adapted to retain the turns of the back iron coil 101 and providing structural strength and stiffness to the coil 101.

Fig. 2 and Fig. 3 illustrate two different designs for the rotor hub. The hub 104, as shown in Fig. 1 and Fig. 2, comprises a ring 200, having an edge 201. The height of the edge 201, measured in X-direction, is larger than the height of the back iron coil 101, such that the edge 201 may act as an end stop feature for the magnets 103, preventing that the magnets 103 are pushed in too far to the inside by the retention ring 102. In the embodiment of Fig. 1 and 2, the edge 201 has a cylindrical shape, and the edge of the magnets 103, positioned at the inner circumference is curved. In another embodiment, the edge 201 may comprise straight, non-curved surfaces, adapted for stopping magnets having a straight edge. In the variant of Fig. 3, the hub 304 comprises a ring 300, of which the height is substantially the same as the height of the back iron coil 101. Thus, no end stop features, for stopping the magnets 103, are present in the variant of Fig. 3.

Fig. 4 to 18 illustrate the various steps comprised in an assembly method, for making the rotor disk 100 presented in Fig. 1. First, a strip 400 of back iron material, e.g. a thin strip of electrical steel, is welded onto the rotor hub 304, as is illustrated in Fig. 4. In the shown embodiment, spot welds 402 are used for connecting one end 401 of the strip 400 to the ring 300 of the hub 304. Next, the strip 400 is coiled under high pretension; preferably a tangential pretension of at least 10 MPa is applied. In the shown embodiment, the strip 400 is coiled directly on the rotor hub 304, not on a separate mandrel. Thus, no transfer from a separate mandrel to the rotor hub is needed after coiling. In this way, the high pretension as applied during coiling can easily be maintained. Also remark that the welds 402 establish a non-releasable connection between the strip end 401 and the hub 304, which is allowed as the back iron coil 101 will not be taken off from the hub 304 after coiling.

Fig. 5 shows the back iron coil 101 as obtained after coiling. The coiled strip 400 of back iron material comprises a second end 501. As is visible from the figure, the thickness of this second end 501 causes a step to be present at the outer circumference of the back iron coil 101. In other words, after coiling, the back iron coil 101 does not have a perfectly smooth outer circumference and does not have a perfectly round outer diameter. In order to remove the step caused by the lamination thickness, the outside circumference of the back iron coil 101 is machined to a smooth finish. However, to avoid separation of the laminations during machining, a circumferential weld 601 is applied before machining.

The circumferential weld 601 is illustrated in Fig. 6 and Fig. 7. In the shown embodiment, the circumferential weld 601 is a continuous weld, applied over the whole outer circumference of the back iron coil 101. By means of the circumferential weld 601, the outer turn 602 of the back iron coil 101 is welded to the previous turn 603. After applying the circumferential weld 601, the outer circumference 600 is machined, so as to obtain a smooth round outer diameter. In this, an outer diameter is targeted that is slightly larger than the inner diameter of the retention ring 102 before assembly, thereby allowing for a press fit between the retention ring 102 and the back iron coil 101.

In a next step, radially extending reinforcement elements 105, serving at the same time as locking features 105, are attached to the back iron coil 101, as is illustrated in Fig. 8 to 11. The locking feature 105 comprises a bottom surface 1103 and two angled side surfaces 1101, 1102. In the shown embodiment, the locking feature 105 is a straight V-spring, provided as a metal sheet comprising two upwardly extending plates or legs 1101, 1102 connected to a bottom surface 1103. The bottom surface 1103 has a rectangular shape, such that the fold lines, at which the angled side surfaces 1101, 1102 are connected to the bottom surface 1103, are parallel and both extend in radial direction. When an angled side surface 1101, 1102 is bent in a direction away from the bottom surface 1103, thereby elastically deforming the sheet material, it tends to return to its original shape, thereby exerting a spring force. Due to this resiliency, magnets 103 may be clamped by the angled side surfaces 1101, 1102, when being positioned between the locking features 105.

Fig. 9 illustrates that during assembly, a magnet 103 may be inserted between two adjacent locking features 105, the insertion being done in radial direction. In mounted condition, each angled surface 1101, 1102 of a locking feature 105 engages a side edge of one of the neighbouring pair of magnets 103. Thus, every magnet 103 is clamped by two respective locking features 105 positioned at both sides of the magnet, as is shown in the front view of Fig. 10 and the cross section of Fig. 11.

Fig. 11 further shows that every magnet 103 comprises two sloped side edges 1104, such that an angled side surface 1101, 1102 of a locking feature engages a sloped side edge 1104 of a magnet 103. While clamping, the locking features 105 thus are in an elastic deformation in order to keep a compressive load on the magnets 103, thereby axially locking the magnets 103. The angle of the angled side surfaces 1101, 1102 is finely tuned so that the compression load from the V-shape guarantees the locking of the magnets 103. In the shown embodiment, a magnet 103 can still slide in the radial direction after being mounted between two locking features 105. In this way, during use of the rotor in the axial flux machine, the back iron can expand relative to the magnet due to differences in thermal expansion.

Fig. 11 further illustrates how the locking features 105 are connected to the back iron 101. In the variant of Fig. 11(b) the bottom surface 1103 of any locking feature 105 is glued to the back iron 101, by means of an adhesive. In the variant of Fig. 11(a) the bottom surface 1103 of any locking feature 105 is welded to the back iron 101, by means of a radial weld 1100. In the latter case, additional stiffness is provided to the back iron coil 101, not only by the locking features acting as radial ribs or spokes, but also by consecutive turns 106 of the coil 101 being welded to one another.

Optionally, for providing additional stiffness to the back iron coil 101, the locking features 15 may be connected to the hub 104 or 304, e.g. by means of welding. In the embodiment of Fig. 1 and Fig. 8, the locking features 15 are used in combination with the hub 104, having a raised edge 201. The locking features 15 may be connected to the hub 104, e.g. by welding them against the raised edge 201. In another embodiment, the locking features 15 may be used in combination with the hub 304, not having such a raised edge. In this case, the locking features 105, extending in radial direction, may extend, at least partially, over the ring 300 of the hub 304, and may be connected thereto e.g. by means of welding.

Fig. 12 shows another embodiment of a resilient type of locking feature 1200, which may replace the locking features 105 in any of the described embodiments of the rotor disk 100. The locking features 1200 each comprise a bottom surface 1203, which is connected to the back iron 101, and two angled side surfaces 1201, 1202. Similar to the previously described locking features 105, a magnet 103 may be positioned between two adjacent locking features 1200, such that the side edges of the magnet 103 are clamped by respective angled side surfaces 1201, 1202. In the embodiment of Fig. 12, the locking feature 1200 is a skewed V-spring, implying that the bottom surface 1103 has a tapered shape. Thus, the fold lines, at which the angled side surfaces 1201, 1202 are connected to the bottom surface 1203, are non-parallel. In the shown embodiment, the distance between both fold lines is decreasing towards the outer circumference of the back iron 101. In another embodiment, another type of skewed V-spring may be used, wherein the distance between both fold lines is increasing towards the outer circumference of the back iron 101.

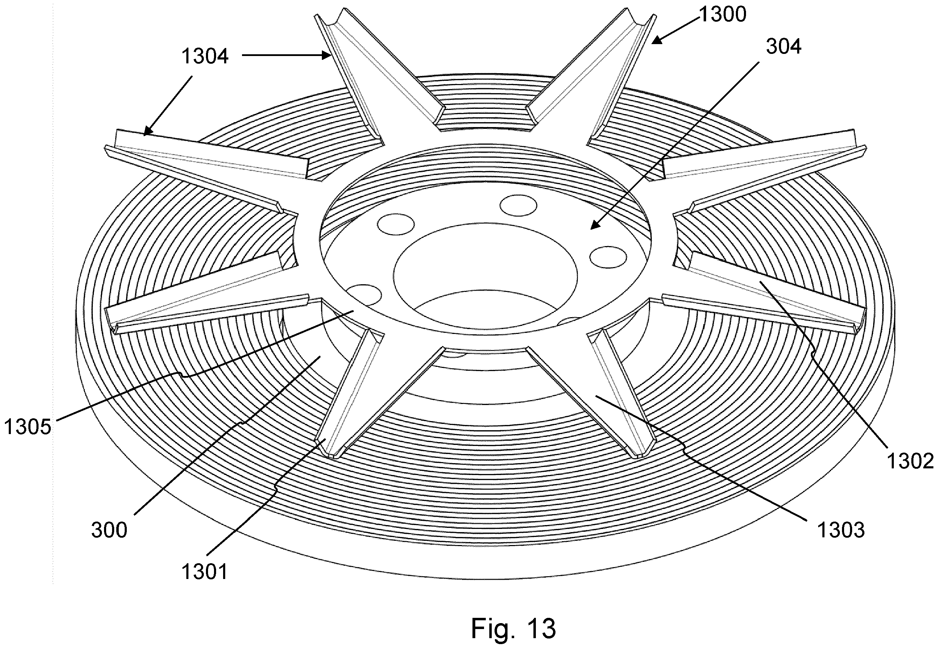

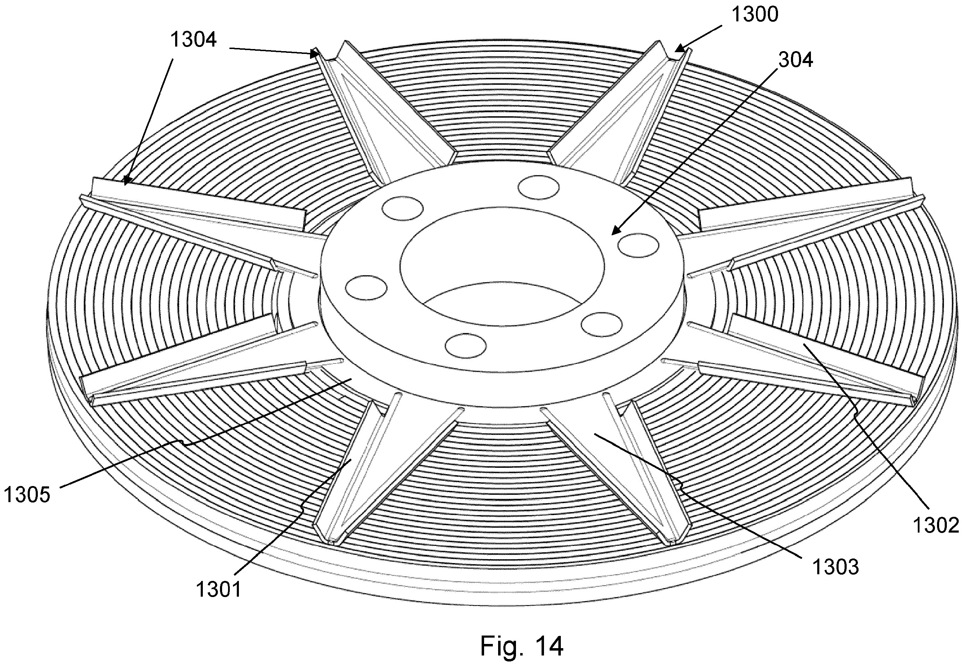

Fig. 13 and 14 show yet another embodiment of a resilient type of locking features 1304, which may replace the locking features 105 in any of the described embodiments of the rotor disk 100. Fig. 13 gives an exploded view, while Fig. 14 shows the locking features after being mounted. The locking features 1304 are skewed V-springs, similar to the locking features 1200 presented in Fig. 12. Every locking feature comprises a bottom surface 1303, having a tapered shape, and two angled side surfaces 1301, 1302. The fold lines, at which the angled side surfaces 1301, 1302 are connected to the bottom surface 1303, are non-parallel, with a decreasing distance therebetween towards the outer circumference of the back iron 101 in mounted condition. Different from the embodiment of Fig. 12, the skewed V-springs 1304 are now connected to one another, by means of a ring 1305. In this way, a single star-shaped part 1300 is obtained. The star-shaped part 1300 is connected to the hub 304. In particular, the ring 1305 of the star-shaped part 1300 is connected to the ring 300 of the hub 304, e.g. by means of welding. Additionally or alternatively, the bottom surfaces 1303 may be connected to the back iron 101. A magnet 103 may be positioned between two adjacent locking features 1304, such that the side edges of the magnet 103 are clamped by respective angled side surfaces 1301, 1302. In another embodiment, another type of skewed V-springs may be used in the star-shaped part, wherein for each of the V-springs the distance between both fold lines is increasing towards the outer circumference of the back iron 101.

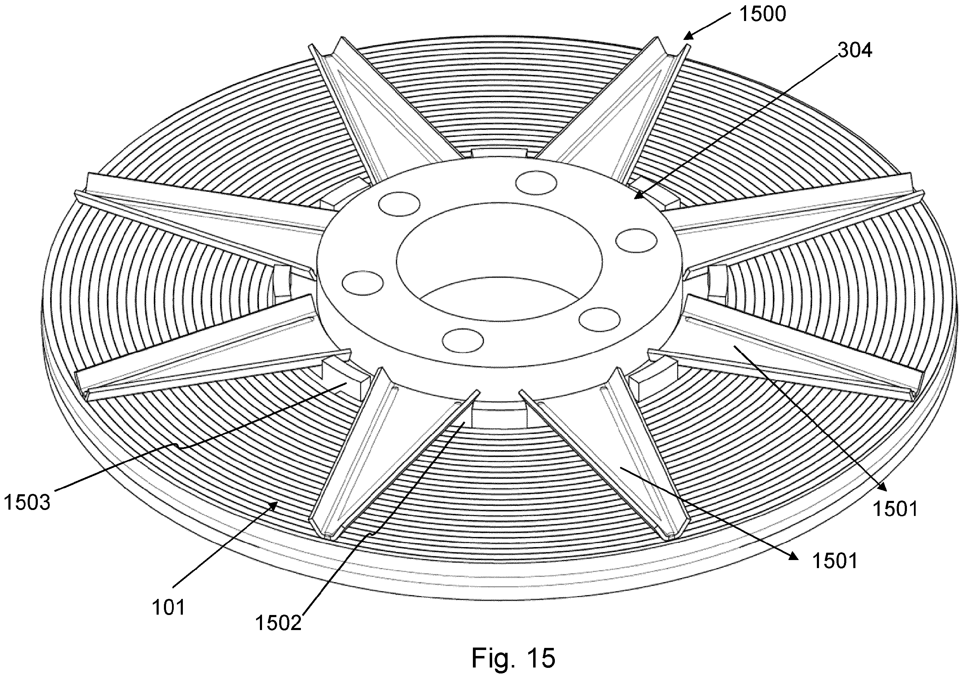

Finally, Fig. 15 shows a star-shaped part 1500, comprising locking features or skewed V-springs 1501, the latter being connected to one another by means of a ring 1502. The star-shaped part 1500 may replace the star-shaped part 1300 of Fig. 13 and 14 in any of the described embodiments of the rotor disk 100. Different from Fig. 14, the star-shaped part 1500 comprises end stop features 1503. The end stop features 1503 are connected to the ring 1502 and each form an edge or step extending from the upper face of the ring 1502. In mounted condition, the magnets 103 are pushed against the end stop features 1503 by the retention ring 102.

Fig. 16 and Fig. 17 give a three-dimensional view of the rotor disk, showing the back side 108. In a next step of the assembly method, radial weld lines 1600 may be applied, as is illustrated in Fig. 16, thereby welding consecutive turns 106 of the back iron coil 101 to one another. In the embodiment of Fig. 16 the radial weld lines 1600 extend over a portion of the hub 104, such that the first turn of the back iron coil is welded to the hub 104. Similarly, not shown in the figures, radial weld lines may be applied at the front side 107 of the back iron coil 101. The radial welds further contribute to increasing the structural strength and stiffness of the back iron coil 101.

In another embodiment, as shown in Fig. 17, a reinforcement structure 1700 is connected to the back side 108 of the back iron coil 101. The reinforcement structure 1700 comprises structural elements 1701, each of them extending in radial direction. The structural elements 1701 are connected to one another by a ring 1702, thereby obtaining a single part 1700. The reinforcement structure is connected to the back iron 101, e.g. by means of gluing or welding. The radial structural elements 1701 act as radial ribs or spokes, thereby increasing the stiffness of the coil 101. In case the structure 1700 is welded to the coil 101, radial welds may be applied, thereby welding consecutive turns to one another when welding the structural elements 1701 to the back iron coil 101. The radial welds further contribute to increasing the structural strength and stiffness of the back iron coil 101.

In a final step of the assembly method, as illustrated in Fig. 18 and Fig. 1, the retention ring 102, e.g. a carbon fibre ring 102, is press fitted over the back iron coil 101 with an interference fit. In the shown embodiment, the retention ring 102 is arranged such that it is placed around the back iron coil 101 and around the magnets 103. In another embodiment, the retention ring may be placed only around the back iron coil 101.

It is clear that in the above-described method steps, the order of execution may be varied, according to various embodiments. For example, the radial reinforcement elements may be connected to the back iron before welding the outer circumference of the coil, the retention ring may be placed before connecting the radial reinforcement element, etc.

Fig. 1 to 18 illustrate a first embodiment, wherein the retention system comprises a retention ring 102 placed around the back iron coil 101, thereby retaining the turns 106 of the back iron coil 101 by compressing the turns in radial direction. Fig. 19 and 20 illustrate a second embodiment, wherein the retention system does not comprise such a retention ring 102. Instead, the retention system comprises one or more radially extending welds, thereby retaining the turns 106 of the back iron coil 101 by welding consecutive turns 106 to one another. Fig. 19 gives a three-dimensional view of a rotor disk 1900, and Fig. 20 shows an intersected rotor disk 1900.

In the second embodiment, the back iron coil 101, hub 104, magnets 103 and locking features or reinforcement elements 105 are similar as the corresponding features presented in Fig. 1. However, the rotor disk 1900 comprises a ring 1901 which is placed around the magnets 103, but is not placed around the back iron coil 101. The ring 1901 therefore contributes to radially retaining the magnets 103, but not to retaining the turns 106 of the back iron coil 101. In this case, structural strength of the back iron coil is obtained by means of radial welds, in particular radial welds 1100 used for connecting the radial reinforcement elements 105 to the back iron coil 101. In addition, radial weld lines may be provided, e.g. at the back side 108, as was illustrated in Fig. 16 and/or a reinforcement structure 1700 may be welded to the back side 108, as was illustrated in Fig. 17.

In a third embodiment, not shown in the figures, the retention system comprises radial welds, but these welds do not serve to connect reinforcement elements 105 or locking features 105 to the front side of the back iron coil 101. For example, radial weld lines are present, at the front and/or back side, without using these weld lines for connecting an element to the back iron coil 101. In another example, radial welds are provided, which are used to connect a reinforcement structure 1700 to the back side of the back iron coil 101.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Rotor disk (100) for an axial flux machine, the rotor disk (100) comprising:
- a central axis in axial direction corresponding to the rotational axis of the axial flux machine when mounted;
- magnets (103) adapted to generate a magnetic flux in axial direction;
- a back iron (101) adapted to close the pathway of the magnetic flux, the back iron (101) comprising a front side (107) and opposing back side (108), and the magnets (103) being attached to the front side (107) of the back iron (101), wherein the back iron (101) is provided as a wound coil comprising multiple turns (106), the back iron coil (101) being mounted on an inner hub (104), **CHARACTERIZED IN THAT:**
- the back side (108) of the back iron coil (101) is, at least partially, exposed; and
- the rotor disk (100) comprises a retention system providing structural strength to the back iron coil (101), the retention system comprising
∘ a retention ring (102) placed around the back iron coil (101), thereby retaining the turns (106) of the back iron coil (101) by compressing the turns (106) in radial direction,
and/or
∘ one or more radially extending welds (1100), thereby retaining the turns (106) of the back iron coil (101) by welding consecutive turns to one another.

2. Rotor disk (100) according to claim 1,
wherein the rotor disk (100) comprises radially extending reinforcement elements (105) attached to the back iron (101), the reinforcement elements (105) being placed between the magnets (103) at the front side (107) of the back iron (101), and/or being placed at the back side (108) of the back iron (101).

3. Rotor disk (100) according to claim 2,
wherein the radially extending reinforcement elements (105) are welded to the front side (107) and/or back side (108) of the back iron coil (101).

4. Rotor disk (100) according to claim 2 or 3,
wherein the retention system comprises one or more radially extending welds (1100) applied at the front side (107) of the back iron coil (101), wherein at least some of the radially extending welds (1100) each are used for attaching one of the radially extending reinforcement elements (105) to the front side (107) of the back iron coil (101).

5. Rotor disk (100) according to claim 3 or 4,
wherein the radially extending reinforcement elements (105) are welded to the hub (104, 304).

6. Rotor disk (100) according to claim 2 to 5,
wherein at least some of the radially extending reinforcement elements (105) serve as locking features (105), being placed between the magnets (103) at the front side (107) of the back iron coil (101) and adapted to clamp the magnets (103), thereby axially locking the magnets (103).

7. Rotor disk (100) according to claim 6,
wherein each of the locking features (105) comprises a flexible portion (1101, 1102) in contact with the adjacent magnets (103), thereby clamping the magnets (103) due to elastic deformation or resilience of the flexible portion (1101, 1102).

8. Rotor disk (100) according to any of the preceding claims,
wherein the retention system comprises the retention ring (102), and the retention ring (102) is press fitted over the back iron coil (101) with an interference fit.

9. Rotor disk according to claim 8,
wherein the outer circumference of the back iron coil (101) is machined, such that the back iron coil (101) has a round outer diameter enabling an interference fit with the inner diameter of the retention ring (102).

10. Rotor disk (100) according to claim 9,
wherein the back iron coil (101) comprises a circumferential weld (601), such that the outer turn (602) of the back iron coil (101) is welded to the previous turn (603), over at least a portion of the circumference of the outer turn (602).

11. Rotor disk (100) according to any of the preceding claims,
wherein the retention system comprises the retention ring (102), and wherein the retention ring (102) comprises a first portion placed around the back iron coil (101), adapted to radially retain the back iron coil (101), and a second portion placed around the magnets (103), adapted to radially retain the magnets (103).

12. Method for assembling a rotor disk (100) for an axial flux machine, comprising:
- providing a hub (104);
- providing a strip (400) of back iron material;
- connecting an end (401) of the strip (400) to the hub (104), for example by means of welding;
- winding the strip (400) onto the hub (104) while applying a tangential pretension on the strip (400), thereby forming a back iron coil (101) comprising multiple turns (106);
- retaining the turns (106) of the back iron coil (101) by
∘ placing a retention ring (102) around the back iron coil (101), thereby compressing the turns (106) in radial direction,
and/or
∘ welding consecutive turns (106) of the back iron coil (101) to one another by means of one or more radially extending welds (1100);
- attaching magnets (103) to one of the opposing sides (107) of the back iron coil (101), this side being the front side (107) of the back iron coil (101).

13. Method according to claim 12,
wherein the tangential pretension is at least 10 MPa.

14. Method according to claim 12 or 13, comprising:
- welding the outer turn (602) of the back iron coil (101) to the previous turn (603), over at least a portion of the circumference of the outer turn (602);
- machining the outer circumference (600) of the back iron coil (101), thereby obtaining a round outer diameter enabling an interference fit with the inner diameter of a retention ring (102);
- press fitting the retention ring (102) around the back iron coil (101) with an interference fit.

15. Method according to claim 12 to 14, comprising:
- welding reinforcement elements (105) to the front side (107) of the back iron coil (101), the reinforcement elements (105) extending in radial direction;
- attaching the magnets (103) between respective adjacent reinforcement elements (105).
